## Europäisches Patentamt

## European Patent Office

## Office européen des brevets

(19)

(11) Veröffentlichungsnummer: **0 056 559**
. **B1**

(12) **EUROPÄISCHE PATENTSCHRIFT**

(45) Veröffentlichungstag der Patentschrift:
**27.02.85**

(51) Int. Cl.⁴: **B 65 G 51/32**

(21) Anmeldenummer: **81730109.6**

(22) Anmeldetag: **20.10.81**

(54) Rohrpoststation zum Senden, pneumatisch gebremsten Empfangen und Durchfahren von Rohrpostbüchsen.

(30) Priorität: **19.01.81 DE 3102248**

(43) Veröffentlichungstag der Anmeldung:
**28.07.82 Patentblatt 82/30**

(45) Bekanntmachung des Hinweises auf die Patenterteilung:
**27.02.85 Patentblatt 85/9**

(84) Benannte Vertragsstaaten:
**AT CH FR GB IT LI NL SE**

(56) Entgegenhaltungen:
**AT - B - 353 172**
**DE - A - 1 920 611**
**DE - A - 2 400 131**
**DE - A - 2 652 276**
**DE - B - 1 907 812**
**DE - C - 1 125 849**
**FR - A - 2 291 129**

(73) Patentinhaber: **Siemens Aktiengesellschaft, Berlin und München Wittelsbacherplatz 2, D-8000 München 2 (DE)**

(72) Erfinder: **Kardinal, Hans-Joachim, Ing. grad., Am Waldhaus 27, D-1000 Berlin 38 (DE)**

ACTORUM AG

**Beschreibung**

Aus der AT-B Nr. 353172 ist eine Rohrpoststation zum Senden, Empfangen und Durchfahren von Rohrpostbüchsen mit zwei aneinander gegenüberliegenden Begrenzungswänden der Rohrpoststation gelegenen Rohrstutzen für ein ankommendes und ein abgehendes Fahrrohr bekannt; in diesen Begrenzungswänden befindet sich eine Einschleusöffnung für abzusendende Rohrpostbüchsen und eine Ausschleusöffnung für empfangene Rohrpostbüchsen. Innerhalb der Begrenzungswände ist eine zum Empfang von Rohrpostbüchsen in die Flucht des Rohrstutzens für das ankommende Fahrrohr eingefahrene Rohrkammer angeordnet, der eine an einem Ende der Kammer im Sinne des Aufbaus eines die Rohrpostbüchse abbremsenden Luftpolsters wirkende Verschlussvorrichtung und ein in der Empfangslage der Rohrkammer den Rohrstutzen für das ankommende Fahrrohr mit dem für das abgehende Fahrrohr pneumatisch verbindenden Luftleitkanal zugeordnet ist.

Bei dieser Rohrpoststation ist die Verschlussvorrichtung als elektromagnetisch bzw. motorisch angetriebener Schieber ausgebildet. Der Schieber weist eine bewegliche Platte auf, die in einem Schiebergehäuse geführt ist. Das Schiebergehäuse ist zu diesem Zweck mit der Rohrkammer fest verbunden und wird mit dieser gemeinsam verschoben. Der eigentliche Antrieb der Rohrkammer erfolgt über einen Zahnstangenantrieb, der im mittleren Bereich der Rohrkammer angreift. Bei vertikaler Ausrichtung der Rohrkammer – übliche Normallage von Rohrpoststationen – befindet sich der Schieber im unteren Bereich der Station. Die Rohrstutzen für das ankommende und das abgehende Fahrrohr weisen im Randbereich des Stationsgehäuses Löcher auf, die in den Luftleitkanal einmünden. Im mittleren Bereich des Luftleitkanals befindet sich ein Rückschlagventil, das für die von oben nach unten strömende Luft geöffnet, dagegen bei umgekehrter Luftrichtung gesperrt ist. Bei Ankunft einer Rohrpostbüchse aus dem oberen Fahrrohr ist der Schieber in den lichten Querschnitt der Rohrkammer eingefahren, so dass der Förderluftstrom durch die Rohrkammer unterbrochen ist. Der Förderluftstrom verläuft durch die Löcher in den Fahrrohrstutzen und den Luftleitkanal, so dass bis zum Eintreten der Rohrpostbüchse in den Bereich der Luftlöcher des Rohrstutzens für das ankommende Fahrrohr ein wirksamer pneumatischer Antrieb zur Verfügung steht. Von diesem Bereich bis zur Ebene des Schiebers erstreckt sich die Bremsstrecke, in der die Rohrpostbüchse ein sie abbremsendes Luftpolster vor sich aufbaut.

Von unten kommende Rohrpostbüchsen durchfahren zunächst den Bereich des geöffneten Schiebers, betätigen nach der Durchfahrt einen Kontakt und steuern damit einerseits die Richtung des fördernden Luftstroms um und schalten andererseits den Schieberantrieb ein, so dass die Rohrkammer im unteren Bereich verschlossen wird. Anschliessend laufen die gleichen Vorgänge wie bei Ankunft einer von oben in die Rohrpoststation eintretenden Rohrpostbüchse ab.

Bei der bekannten Rohrpoststation ist also sowohl bei Ankunft von abwärts als auch von aufwärts in die Rohrpoststation eintretenden Rohrpostbüchsen jeweils der gleiche Empfangsvorgang vorgesehen, bei dem sich in der Endphase die Rohrpostbüchse von oben nach unten bewegt. Dies ist insofern als nachteilig anzusehen, als bei der Projektierung zeitgemässer Rohrpostanlagen in zunehmendem Masse angestrebt wird, die Rohrpostrohre von unten in die Rohrpoststation eintreten zu lassen, weil damit eine Verkleidung bzw. Abdeckung der Rohrpostrohre durch Abdeckungen, Büromöbel oder Theken erleichtert ist. Ein weiterer Nachteil ist darin zu sehen, dass die pneumatische Bremsung insofern unvollkommen ist, als leichte Rohrpostbüchsen besser und wirksamer abgebremst werden als schwere Rohrpostbüchsen; schwere Rohrpostbüchsen weisen bei gleicher Luftgeschwindigkeit in von oben nach unten verlaufenden Rohrtrassen grössere Fördergeschwindigkeiten als leichte Rohrpostbüchsen auf. Um auch schwere und damit schnellere Rohrpostbüchsen wirksam abbremsen zu können, wird für die bekannte Rohrpoststation bei hohen Fördergeschwindigkeiten schwerer Rohrpostbüchsen ein Luftleitkanal vorgesehen, der aus der Rohrpoststation austritt und in einem entsprechend weit oberhalb der Rohrpoststation gelegenen Bereich in das von oben in die Rohrpoststation eintretende Fahrrohr einmündet.

Eine Rohrpoststation, bei der die für den Empfang bestimmten Rohrpostbüchsen von unten her in die Rohrpoststation eintreten und innerhalb derselben pneumatisch abgebremst werden, ist aus der DE-AI Nr. 2652276 bekannt. Es handelt sich dabei im einzelnen um eine Rohrpoststation zum Senden, Empfangen und Durchfahren von Rohrpostbüchsen mit zwei aneinander gegenüberliegenden Begrenzungswänden der Rohrpoststation gelegenen Rohrstutzen für ein ankommendes und ein abgehendes Fahrrohr, mit einer Einschleusöffnung für abzusendende Rohrpostbüchsen, mit einer Ausschleusöffnung für empfangene Rohrpostbüchsen, mit einer zum Empfang von Rohrpostbüchsen dienenden Rohrkammer, die in dem mit dem abgehenden Fahrrohr benachbarten Endbereich abgeschlossen ist und sich in der Empfangslage mit ihrem offenen Ende in Flucht mit dem Rohrstutzen für das ankommende Fahrrohr befindet, wobei die Rohrkammer mit einer parallel zu ihr verlaufenden und gemeinsam mit ihr verstellbaren zweiten Rohrkammer verbunden ist, die in einer Stellung in der Flucht beider Rohrstutzen und in einer anderen Stellung in Flucht zur Einschleusöffnung steht.

Im abgeschlossenen Endbereich der Rohrkammer befindet sich in deren Mantelfläche eine Öffnung, die wahlweise durch eine Muffe freigegeben oder abgedeckt werden kann. Ein Antrieb für diese Muffe wird mittels eines Kontaktes gesteuert, der vor der Rohrpoststation am ankommenden Fahrrohr angeordnet ist. Eine ankommende Rohrpostbüchse bewirkt durch Beeinflussung des Kontaktes ein Tätigwerden des Antriebs, so dass die Öffnung, durch die bis zu diesem Zeitpunkt die Rohrpostbüchse antreibende För-

derluft entwichen ist, abgedeckt wird. Daraufhin beginnt sich vor der aufgrund ihrer kinetischen Energie weiter in Richtung der Rohrkammer fahrenden Rohrpostbüchse ein diese abbremsendes Luftpolster aufzubauen, das zu einem pneumatisch gebremsten Auftreffen der Rohrpostbüchse auf der abgeschlossenen Stirnfläche der Rohrkammer führen soll. Die kinetische Energie ($\frac{1}{2} m \cdot V^2$) kann in der Praxis je nach dem Zustand der den Transport sicherstellenden Filzringe der Rohrpostbüchsen und deren Beladung in der Praxis etwa im Verhältnis 1:10 schwanken. Da die Lage des Kontaktes am ankommenden·Fahrrohr derart gewählt werden muss, dass auch unbeladene Rohrpostbüchsen mit verhältnismässig stark abgefahrenen Filzringen noch sicher empfangen werden können, weisen Rohrpostbüchsen mit weniger stark abgefahrenen Filzringen — also grösserem Durchmesser — und grösserer Beladung eine entsprechend grosse Energie beim Aufprall auf die die Rohrkammer verschliessende Stirnfläche auf. Im ungünstigten Fall wird also durch das Luftpolster nur etwa 10% der kinetischen Energie der ankommenden Rohrpostbüchse abgebaut, während 90% dieser Energie als Aufschlagenergie auftritt.

Die der Erfindung zugrunde liegende Aufgabe besteht darin, einerseits die langsamsten unbeladenen Rohrpostbüchsen sicher in die Rohrkammer einzufügen und andererseits die schnellsten maximal beladenen Rohrpostbüchsen innerhalb der Rohrkammer ausreichend abzubremsen. Diese Aufgabe wird erfindungsgemäss durch folgende Merkmale gelöst:

1. ein Luftleitkanal verbindet in der Empfangslage der Rohrkammer den Rohrstutzen für das ankommende Fahrrohr pneumatisch mit dem für das abgehende Fahrrohr,

2. der Luftleitkanal mündet mit einem Ende in die Rohrkammer ein und ist gemeinsam mit der ersten und der zweiten Rohrkammer derart verstellbar, dass bei mit den beiden Rohrstutzen fluchtender Lage der zweiten Rohrkammer der Zugang des Luftleitkanals zumindest zum Rohrstutzen für das abgehende Fahrrohr gesperrt, dagegen bei mit den beiden Rohrstutzen fluchtender Lage der Rohrkammer freigegeben ist.

Die erfindungsgemässe Rohrpoststation kann in jeder beliebigen Lage eingebaut werden. Sie kann also z.B. horizontal liegen oder derart vertikal angeordnet werden, dass das offene Ende der Rohrkammer entweder nach oben oder nach unten weist. Als bevorzugt ist anzusehen, dass der Rohrstutzen für das ankommende Fahrrohr an der unteren Begrenzungswand angeordnet ist. Die Rohrpostbüchsen werden dabei in der Endphase ihres Empfangs jeweils von unten in die Rohrpoststation eingeführt. Tritt eine Rohrpostbüchse zunächst von oben in die Rohrpoststation ein, so ist die Rohrpoststation derart geschaltet, dass die zweite Rohrkammer in die Flucht des ankommenden und des abgehenden Fahrrohrs gestellt ist, so dass die ankommende Rohrpostbüchse durch die Rohrpoststation durchfährt. Nachdem die Rohrpostbüchse die Rohrpoststation nach unten verlassen hat, wird mittels eines durch die Rohrpostbüchse betätigten Fahrkontaktes eine Steuerungseinrichtung für den Antrieb der beiden Rohrkammern beeinflusst und damit das Einfahren der einseitig abgeschlossenen·Rohrkammer in die Flucht des unteren Rohrstutzens eingeleitet. Anschliessend wird die Richtung der antreibenden Luftströmung umgekehrt, wobei diese innerhalb der Rohrpoststation durch den Luftleitkanal verläuft; damit wird die Rohrpostbüchse von unten in die Rohrkammer eingeführt. Um auch aus diesem Vorgang notwendige Verstellvorgänge für die Rohrkammer ableiten zu können, ist gemäss einer weiteren vorteilhaften Ausgestaltung der Erfindung zumindest im Bereich der Rohrkammer ein von Rohrpostbüchsen betätigbarer Kontakt angeordnet.

Stellt die Rohrpoststation das Ende eines im übrigen im Wendebetrieb befahrenen Fahrrohres dar, so kann an den Rohrstutzen für das obere Fahrrohr eine Luftleitung angeschlossen werden. Liegt die Rohrpoststation dagegen am Ende eines oberhalb von ihr geführten Rohres, so wird die Rohrpoststation derart angeordnet, dass das offene Ende der Rohrkammer nach oben weist. Sowohl abzusendende als auch angekommene Rohrpostbüchsen treten dann jeweils durch die Ausschleusöffnung hindurch.

Um eine möglichst wirksame pneumatische Bremsung der in die Rohrpoststation eintretenden Rohrpostbüchsen erzielen zu können, wird vorgesehen, dass der Luftleitkanal in einem dem offenen Ende der Rohrkammer nahen Bereich in diese eintritt. Damit ist eine maximale Länge der eigentlichen Bremsstrecke erreicht.

Die notwendige Abdichtung der beiden Rohrstutzen in den verschiedenen Stellungen der Rohrkammern wird dadurch erzielt, dass beide Rohrkammern in einem Tragkörper angeordnet sind, der zumindest im Randbereich der offenen Enden der beiden Rohrkammern parallel zu den benachbarten Begrenzungswänden verlaufende Stirnflächen aufweist. Diese Stirnflächen können für die Dichtung mit herangezogen werden, wobei auf eine entsprechende Materialanpassung zu achten ist. Diese Materialanpassung kann auch dadurch erfolgen, dass die Stirnflächen gesonderte Konstruktionsteile darstellen, die am Tragkörper befestigt werden. In Anpassung an diese Ausgestaltung der beiden Rohrkammern bzw. deren Anbringung in einem gemeinsamen Tragkörper wird vorgesehen, dass an den Begrenzungswänden die Rohrstutzen für das ankommende und für das abgehende Fahrrohr umgreifende Dichtringe angeordnet sind.

Diese Dichtringe können aufgeklebt sein; bevorzugt wird jedoch, dass ringförmige Nuten in den Begrenzungswänden die Dichtringe aufnehmen. Um eine einwandfreie Abdichtung bei nur geringer mechanischer Beanspruchung der Dichtringe zu erzielen, wird vorgesehen, dass die Dichtringe federnd gelagert und/oder ausgebildet an die Stirnflächen des Tragkörpers angedrückt sind.

Sofern dem Luftleitkanal ein gesonderter Zutritt zum Rohrstutzen für das abgehende Fahrrohr zugeordnet ist, muss auch die entsprechende Zutrittsöffnung abdichtbar sein. Dafür können die gleichen Vorrichtungen vorgesehen sein. Eine vorteilhafte Weiterbildung der Erfindung macht zusätzliche Dichtvorrichtungen für den Luftleitkanal jedoch unnötig, indem die Rohrkammer eine geringere Länge als die zweite Rohrkammer aufweist und der Bereich zwischen dem verschlossenen Ende der Rohrkammer und der den Rohrstutzen für das abgehende Fahrrohr aufnehmenden Begrenzungswand zumindest teilweise in den Luftleitkanal einbezogen ist. Da der Luftleitkanal nur dann eine Verbindung mit dem abgehenden Fahrrohr aufweisen soll, wenn die Rohrkammer in die Flucht des ankommenden Fahrrohrs gestellt ist, wird durch diese Führung des Luftleitkanals das Ende desselben in den Bereich des abgehenden Fahrrohres gebracht.

Eine konstruktiv und fertigungstechnisch besonders günstige Realisierung der Zusammenfassung der beiden Rohrkammern und der Einbeziehung des Luftleitkanals in den Tragkörper wird gemäss einer weiteren Ausgestaltung des Tragkörpers dadurch ermöglicht, dass der Tragkörper als einstückiges Strukturteil ausgebildet ist, in dem ausser den beiden Rohrkammern auch der Luftleitkanal ausgearbeitet ist. Dieses Strukturteil kann beispielsweise ein Spritzgussteil sein oder in einer entsprechenden Form als Strukturschaumteil hergestellt sein. Diese Ausbildung als einstückiges Strukturteil ergibt eine ausgeprägte Steifigkeit des Tragkörpers und damit eine ausreichende Gewähr für die Sicherheit des Antriebes, der Führung und der Abdichtung am Tragkörper.

Als besonders günstig im Hinblick auf die benötigten Abmessungen der Rohrpoststation ist anzusehen, dass der Luftleitkanal zumindest teilweise im Bereich zwischen den beiden Rohrkammern ausgebildet ist. Die seitlichen Abmessungen des Tragkörpers werden damit im wesentlichen durch die Summe der beiden Rohrkammerdurchmesser und der Dicke der sie umgebenden Wandbereiche bestimmt, während der Luftleitkanal keine zusätzliche Verbreiterung erfordert. Um dennoch eine ausreichend grosse Querschnittsfläche des Luftleitkanals zu erzielen und keine unnötigen Druckverluste durch Drosselwirkung des Luftleitkanals hinnehmen zu müssen, weist vorzugsweise der Luftleitkanal von seinem mittleren Bereich anwachsende Querschnittsabmessungen auf. Der Luftleitkanal folgt mit seinen seitlichen Begrenzungswänden also dem Verlauf der Rohrkammern.

Eine weitere wesentliche Ausgestaltung der Erfindung bezieht sich ebenfalls auf die notwendigen Abmasse der Rohrpoststation. Es wird vorgesehen, dass der Tragkörper linear verschiebbar gelagert und angetrieben ist. Die Abmasse der Rohrpoststation sind damit in einer zur Achse der Rohrkammer senkrechten Richtung durch den Durchmesser der Rohrkammer bzw. durch die Breite des Tragkörpers vorgegeben. In der dazu senkrechten Verschieberichtung des Tragkörpers ergibt sich eine Abmessung, die etwas grösser als drei Rohrkammerdurchmesser ist, sofern die Einschleusöffnung für abzusendende Rohrpostbüchsen auf der einen Seite und die Ausschleusöffnung für empfangene Rohrpostbüchsen auf der anderen Seite der Flucht der ankommenden und abgehenden Fahrrohre liegt. Gemäss einer vorteilhaften Weiterbildung eines derartigen linear verschiebbar gelagerten und angetriebenen Tragkörpers weist der Tragkörper eine Gradführung auf, in die ein an der Kurbelscheibe eines Kurbeltriebs befestigter Mitnehmer eingreift. Damit werden besonders günstige Antriebsverhältnisse und insbesondere eine genaue Fixierung der jeweiligen Ruhestellungen der beiden Rohrkammern erzielt. Bekanntlich besteht zwischen der gleichförmigen Drehbewegung und der Verschiebebewegung eines Kurbeltriebs ein sinusförmiger Zusammenhang, der für das langsame und exakte Einfahren des Tragkörpers in seine Ruheposition verantwortlich ist.

Die Anzahl der notwendigen Ruhestellungen kann dadurch gering gehalten werden, dass der Achsabstand der beiden Rohrkammern identisch mit dem Abstand von Einschleusöffnung und Rohrstutzen ist. Damit wird erreicht, dass die zweite Rohrkammer genau in Flucht zur Einschleusöffnung steht, wenn die (erste) Rohrkammer mit ihrem offenen Ende in die Flucht des ankommenden Fahrrohrs eingefahren ist. Ein ähnlicher Effekt wird dadurch erzielt, dass der Achsabstand der beiden Rohrkammern identisch mit dem Achsabstand von Ausschleusöffnung und Rohrstutzen für das ankommende Fahrrohr ist. Damit befindet sich die Rohrkammer genau in Flucht zur Ausschleusöffnung, wenn die zweite Rohrkammer in die Flucht des ankommenden und des abgehenden Rohrstutzens eingefahren ist.

Insgesamt wird mit diesen Massnahmen erreicht, dass die Rohrpoststation lediglich zwei Arbeitsstellungen aufweist. In der einen Arbeitsstellung kann eine Rohrpostbüchse in die Rohrpoststation eingebracht und zugleich eine Rohrpostbüchse empfangen werden; in der zweiten Stellung kann eine Rohrpostbüchse die Rohrpoststation durchfahren und zugleich eine vorher empfangene Rohrpostbüchse ausgeschleust werden.

Das automatische Ausschleusen einer vorher empfangenen Rohrpostbüchse bei Verstellen des Tragkörpers und Einfahren des offenen Endes der Rohrkammer in die Flucht der Ausschleusöffnung ist erwünscht, dagegen muss ein Einschleusen einer in der Einschleusöffnung gelagerten Rohrpostbüchse in dieser Stellung des Tragkörpers verhindert werden. Eine Einschleusung in dieser Stellung des Tragkörpers wäre nur dann zulässig, wenn der Tragkörper eine weitere Stellung aufwiese, die die zweite Rohrkammer in die Flucht der Ausschleusöffnung bringt und eine in dem Raum neben der zweiten Rohrkammer gelagerte Rohrpostbüchse in die Flucht des ankommenden bzw. abgehenden Fahrrohres führt. Da dies zu einer Vergrösserung der Abmessungen der Rohrpoststation in Verschieberichtung führt, wird die Mitbenutzung der zweiten Rohrkammer als Einschleusort für abzusendende Rohrpostbüchsen bevorzugt.

In diesem Zusammenhang wird vorgesehen, dass der Tragkörper im Bereich seiner der die Einschleusöffnung aufweisenden Begrenzungswand zugewandten Stirnfläche einen zumindest geringfügig in die Flucht der Einschleusöffnung hineinragenden Sperranschlag trägt. Auf diesem einen Bestandteil des Tragkörpers bildenden Sperranschlag sitzt also die Stirnfläche der Rohrpostbüchse teilweise auf. Bei Verschieben des Tragkörpers gleitet die Stirnfläche der Büchse auf der Stirnfläche so lange entlang, bis die zweite Rohrkammer in Flucht zur Einschleusöffnung steht. Da der Sperranschlag in Verschieberichtung seitlich über die zweite Rohrkammer hinausragt, muss die zur Verschieberichtung senkrechte Begrenzungswand der Rohrpoststation entsprechend weit ausserhalb der Einschleusöffnung liegen, um das ungestörte Verschieben des Tragkörpers nicht zu behindern. Um unnötig grössere Abmessungen der Rohrpoststation in Verschieberichtung zu vermeiden, wird jedoch vorgesehen, dass der Sperranschlag derart ausgebildet und/oder gelagert ist, dass er bei Verschieben des Tragkörpers in die mit der Einschleusöffnung fluchtende Lage durch eine seitliche Begrenzungswand ausgelenkt wird. Vorzugsweise ist der Sperranschlag um eine rohrkammerachsenparallele Lagerachse schwenkbar.

Die Erfindung wird im folgenden anhand eines in 5 Fig. dargestellten Ausführungsbeispiels erläutert.

Die Fig. 1 und 2 zeigen eine Ausführungsform der erfindungsgemässen Rohrpoststation in zwei verschiedenen Schaltstellungen der beiden in ihr enthaltenen Rohrkammern. In der Fig. 3 ist eine zweite Ausführungsform der erfindungsgemässen Rohrpoststation schematisch dargestellt.

Die Fig. 4 zeigt eine Draufsicht auf den Trägerkörper, die Fig. 5 einen Schnitt durch diesen.

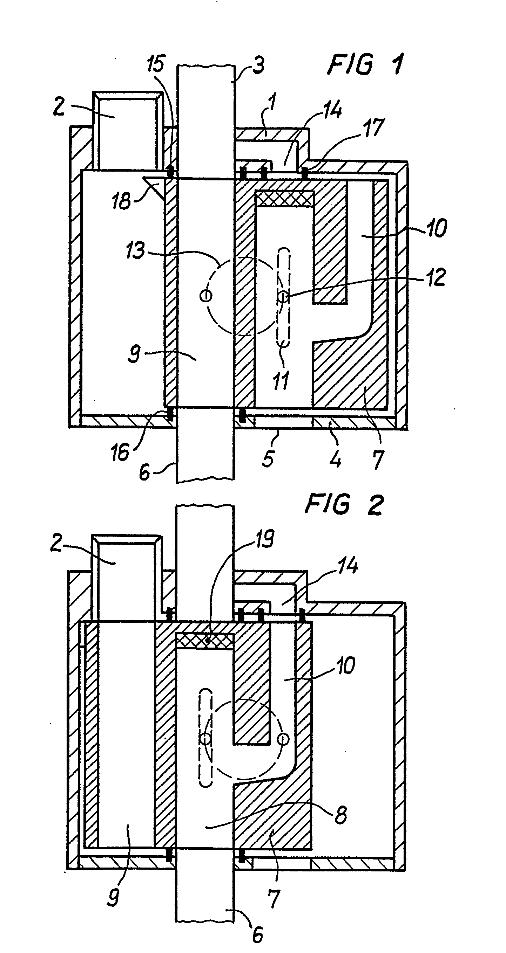

Die in den Fig. 1 und 2 schematisch dargestellte Rohrpoststation weist an ihrer oberen Begrenzungswand 1 einen die Einschleusöffnung darstellenden Rohrstutzen 2 und einen Rohrstutzen 3 für die Aufnahme eines abgehenden Fahrrohrs auf. In der gegenüberliegenden Begrenzungswand 4 befindet sich eine Ausschleusöffnung 5 und ein Rohrstutzen 6 für die Aufnahme eines ankommenden Fahrrohres.

Im Innern der Rohrpoststation ist ein Tragkörper 7 verschiebbar gelagert, in dem eine Rohrkammer 8, eine zweite Rohrkammer 9 und ein Luftleitkanal 10 gebildet sind. Der Tragkörper 7 trägt eine Gradführung 11, in die ein Mitnehmerstift 12 einer Kurbelscheibe 13 eingreift. Die Kurbelscheibe und der – nicht dargestellte – sie antreibende Motor sind am Gehäuse befestigt.

In den dem Tragkörper 7 gegenüberliegenden Randbereichen der Rohrstutzen 3 und 6 sowie einer weiteren Öffnung 14, die die Verbindung des Rohrstutzens 3 mit dem Luftleitkanal 10 bewirkt, befinden sich Dichtringe 15, 16, 17, die in Nuten der Begrenzungswände 1, 4 eingelegt sind und bei Verschieben des Tragkörpers 7 auf den entsprechenden Stirnflächen desselben entlanggleiten.

In der in Fig. 1 dargestellten Stellung der beiden Rohrkammern 8, 9 kann eine in die Rohrpoststation von unten oder oben eintretende Rohrpost-büchse die Rohrpoststation ungehindert durch-fahren. Ebenso ist denkbar, dass eine vorab in der Rohrkammer 8 empfangene Rohrpostbüchse im Moment des Einfahrens in die dargestellte Position aufgrund des Einwirkens der Schwerkraft die Rohrkammer 8 verlässt und beispielsweise in einen – nicht dargestellten – unter der Rohrpoststation befindlichen Auffangkorb gefallen ist.

Sofern in der dargestellten Lage des Tragkörpers 7 eine abzusendende Rohrpostbüchse in den Rohrstutzen 2 eingeführt wird, kann diese nicht in den Raum neben der Rohrkammer 9 einfallen, sondern wird daran durch einen Anschlag 18 gehindert, der um eine rohrkammerachsenparallele Achse schwenkbar ist.

In der in Fig. 2 dargestellten Lage des Tragkörpers 7 befindet sich die Rohrkammer 9 in Flucht zum Rohrstutzen 2, wobei der Anschlag 18 aus der Zeichenebene herausgeklappt ist. Eine zum Absenden in den Rohrstutzen 2 eingeführte Rohrpostbüchse kann jetzt in die Rohrkammer 9 hineinfallen.

Die Rohrkammer 8 befindet sich mit ihrem offenen Ende in Flucht des Rohrstutzens 6 und verhindert mit dem an ihrem verschlossenen Ende angeordneten elastischen Puffer 19 ein Durchfahren einer ankommenden Rohrpostbüchse. Der für die Förderung der Rohrpostbüchsen in die Rohrpoststation hinein notwendige Luftstrom wird über den Luftleitkanal 10 aufrechterhalten. Der Luftleitkanal 10 befindet sich jetzt in fluchtender Lage zur Öffnung 14. Eine ankommende Rohrpostbüchse wird bis zum Ort der Einmündung des Luftleitkanals 10 in die Rohrkammer 8 voll wirksam angetrieben. Wenn der vordere Fahrring der Rohrpostbüchse den Bereich der Einmündung des Luftleitkanals 10 in die Rohrkammer 8 erreicht hat, wirkt der Antrieb nur noch auf den unteren Fahrring der Rohrpostbüchse, während das volle Gewicht der Rohrpostbüchse weiter dem Antrieb entgegenwirkt. Damit wird ein langsames Einfahren der Rohrpostbüchse in ihre Endstellung am Aufschlagpuffer 19, insbesondere durch die vor der Rohrpostbüchse komprimierte Luft, bewirkt.

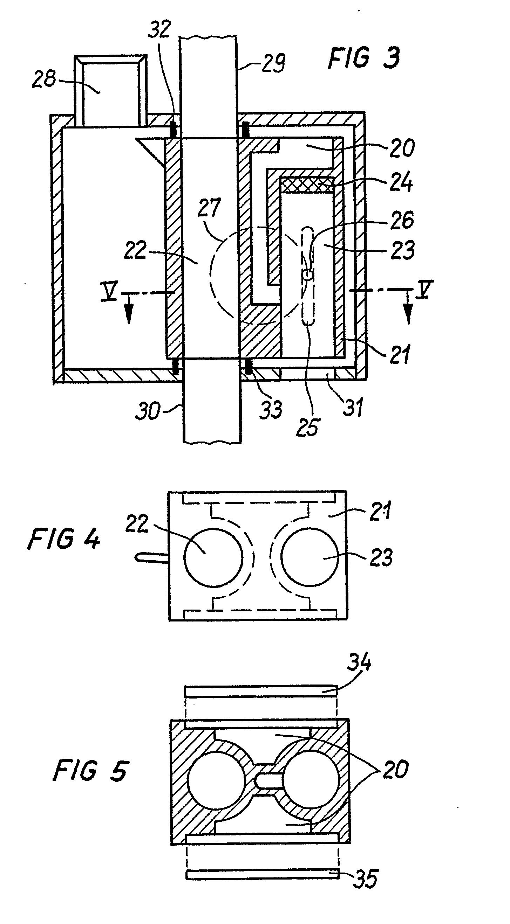

Die in der Fig. 3 schematisch dargestellte Rohrpoststation unterscheidet sich von der Ausführung gemäss den Fig. 1 und 2 im wesentlichen durch eine andere Lage und Ausbildung eines Luftleitkanals 20 in einem linear verschiebbaren Tragkörper 21. Der Luftleitkanal 20 verläuft zwischen einer beidseitig offenen Rohrkammer 22 und einer Rohrkammer 23, deren eines Ende mit einem Aufschlagpuffer 24 abgeschlossen ist. Der Antrieb des Tragkörpers 21 erfolgt wiederum mittels einer an ihm befestigten Gradführung 25, in die ein Mitnehmerstift 26 einer Kurbelscheibe 27 eingreift.

Die relative Lage der Rohrstutzen 28, 29, 30 und 31 bezüglich der beiden Rohrkammern 22, 23 ist die gleiche wie in den Fig. 1 und 2.

Der Luftleitkanal 20 ist derart geführt, dass sein oberes offenes Ende oberhalb der Rohrkammer 23 liegt. Damit wird erreicht, dass beim Verschieben des Tragkörpers 21 in eine Lage, in der die Rohrkammer 23 mit dem Rohrstutzen 30 fluchtet, zugleich der Luftleitkanal 20 in den Bereich des Rohrstutzens 29 eingefahren ist. Damit können separate Dichtringe für den Luftleitkanal 20 entfallen. Die Rohrpoststation ist lediglich mit zwei Dichtringen 32, 33 für die Abdichtung der beiden Rohrstutzen 29, 30 ausgestattet.

Die in den Fig. 4 und 5 dargestellte Draufsicht auf den Tragkörper 21 bzw. Schnitt durch den Tragkörper 21 zeigt insbesondere Form und Grösse des Luftleitkanals 20. Die durch den Herstellvorgang bedingten seitlichen Öffnungen des Luftleitkanals 20 werden durch die beiden Abdeckplatten 34 und 35 geschlossen. Der Querschnitt des Luftleitkanals 20 ist also grösser als der Querschnitt der beiden Rohrkammern 22, 23.

## Patentansprüche

1. Rohrpoststation zum Senden, Empfangen und Durchfahren von Rohrpostbüchsen mit zwei aneinander gegenüberliegenden Begrenzungswänden der Rohrpoststation gelegenen Rohrstutzen für ein ankommendes (6) und ein abgehendes (3) Fahrrohr, mit einer Einschleusöffnung für abzusendende Rohrpostbüchsen, mit einer Ausschleusöffnung (5) für empfangene Rohrpostbüchsen, mit einer zum Empfang von Rohrpostbüchsen dienenden Rohrkammer (8), die in dem mit dem abgehenden Fahrrohr (3) benachbarten Endbereich abgeschlossen ist und sich in der Empfangslage mit ihrem offenen Ende in Flucht mit dem Rohrstutzen (6) für das ankommende Fahrrohr befindet, wobei die Rohrkammer (8) mit einer parallel zu ihr verlaufenden und gemeinsam mit ihr verstellbaren zweiten Rohrkammer (9) verbunden ist, die in einer Stellung in der Flucht beider Rohrstutzen (3, 6) und in einer anderen Stellung in Flucht zur Einschleusöffnung steht, gekennzeichnet durch folgende Merkmale:

1. ein Luftleitkanal (10) verbindet in der Empfangslage der Rohrkammer (8) den Rohrstutzen für das ankommende Fahrrohr (6) pneumatisch mit dem für das abgehende Fahrrohr (3);

2. der Luftleitkanal (10) mündet mit einem Ende in die Rohrkammer (8) ein und ist gemeinsam mit der ersten (8) und der zweiten Rohrkammer (9) derart verstellbar, dass bei mit den beiden Rohrstutzen (3, 6) fluchtender Lage der zweiten Rohrkammer (9) der Zugang des Luftleitkanals (10) zumindest zum Rohrstutzen (3) für das abgehende Fahrrohr gesperrt, dagegen bei mit den beiden Rohrstutzen (3, 6) fluchtender Lage der Rohrkammer (8) freigegeben ist.

2. Rohrpoststation nach Anspruch 1, dadurch gekennzeichnet, dass der vorgesehene Rohrstutzen (6) für das ankommende Fahrrohr an der unteren Begrenzungswand (4) angeordnet ist.

3. Rohrpoststation nach einem der Ansprüche 1 oder 2, dadurch gekennzeichnet, dass der Luftleitkanal (10) in einem dem offenen Ende der Rohrkammer (8) nahen Bereich in diese eintritt.

4. Rohrpoststation nach einem der Ansprüche 1 bis 3, dadurch gekennzeichnet, dass beide Rohrkammern (8, 9) in einem Tragkörper (7) angeordnet sind, der zumindest im Randbereich der offenen Enden der beiden Rohrkammern (8, 9) parallel zu den benachbarten Begrenzungswänden (1, 4) verlaufende Stirnflächen aufweist.

5. Rohrpoststation nach Anspruch 4, dadurch gekennzeichnet, dass an den Begrenzungswänden (1, 4) die Rohrstutzen (3, 6) für das ankommende und für das abgehende Fahrrohr umgreifende Dichtringe (15, 16) angeordnet sind.

6. Rohrpoststation nach den Ansprüchen 4 und 5, dadurch gekennzeichnet, dass ringförmige Nuten in den Begrenzungswänden (1, 4) die Dichtringe (15, 16) aufnehmen.

7. Rohrpoststation nach den Ansprüchen 4 und 5 oder 6, dadurch gekennzeichnet, dass die Dichtringe (15, 16) federnd gelagert und/oder ausgebildet an die Stirnflächen des Tragkörpers (7) angedrückt sind.

8. Rohrpoststation nach einem der Ansprüche 1 bis 7, dadurch gekennzeichnet, dass die Rohrkammer (8) eine geringere Länge als die zweite Rohrkammer (9) aufweist und der Bereich zwischen dem verschlossenen Ende der Rohrkammer (8) und der den Rohrstutzen (3) für das abgehende Fahrrohr aufnehmenden Begrenzungswand (1) zumindest teilweise in den Luftleitkanal (10) einbezogen ist.

9. Rohrpoststation nach einem der Ansprüche 4 bis 8, dadurch gekennzeichnet, dass der Tragkörper (7) als einstückiges Strukturteil ausgebildet ist, in dem ausser den beiden Rohrkammern (8, 9) auch der Luftleitkanal (10) ausgearbeitet ist.

10. Rohrpoststation nach Anspruch 9, dadurch gekennzeichnet, dass der Luftleitkanal (20) zumindest teilweise im Bereich zwischen den beiden Rohrkammern (22, 23) ausgebildet ist.

11. Rohrpoststation nach Anspruch 10, dadurch gekennzeichnet, dass der Luftleitkanal (20) von seinem mittleren Bereich aus anwachsende Querschnittsabmessungen aufweist.

12. Rohrpoststation nach einem der Ansprüche 4 bis 11, dadurch gekennzeichnet, dass der Tragkörper (7) linear verschiebbar gelagert und angetrieben ist.

13. Rohrpoststation nach Anspruch 12, dadurch gekennzeichnet, dass der Tragkörper (7) eine Gradführung (11) aufweist, in die ein an der Kurbelscheibe (13) eines Kurbeltriebs befestigter Mitnehmer (12) eingreift.

14. Rohrpoststation nach einem der Ansprüche 1 bis 13, dadurch gekennzeichnet, dass der Achsabstand der beiden Rohrkammern (8, 9) identisch mit dem Achsabstand von Einschleusöffnung (2) und Rohrstutzen (3) ist.

15. Rohrpoststation nach einem der Ansprüche 1 bis 14, dadurch gekennzeichnet, dass der Achsabstand der beiden Rohrkammern (8, 9) identisch mit dem Achsabstand von Ausschleusöffnung (5) und Rohrstutzen (6) für das ankommende Fahrrohr ist.

16. Rohrpoststation nach einem der Ansprüche 4 bis 15, dadurch gekennzeichnet, dass der Tragkörper (7) im Bereich seiner der die Einschleusöffnung (2) aufweisenden Begrenzungswand zugewandten Stirnfläche einen zumindest geringfügig in die Flucht der Einschleusöffnung (2) hineinragenden Sperranschlag (18) trägt.

17. Rohrpoststation nach Anspruch 16, dadurch gekennzeichnet, dass der Sperranschlag (18) derart ausgebildet und/oder gelagert ist, dass er bei Verschieben des Tragkörpers (7) in die mit der Einschleusöffnung (2) fluchtende Lage durch eine seitliche Begrenzungswand ausgelenkt wird.

18. Rohrpoststation nach Anspruch 17, dadurch gekennzeichnet, dass der Sperranschlag (18) um eine rohrkammerachsenparallele Lagerachse schwenkbar ist.

19. Rohrpoststation nach einem der Ansprüche 1 bis 18, dadurch gekennzeichnet, dass zumindest im Bereich der Rohrkammer ein von Rohrpostbüchsen betätigbarer Kontakt angeordnet ist.

20. Rohrpoststation nach einem der Ansprüche 1 bis 19, dadurch gekennzeichnet, dass das abgeschlossene Ende der Rohrkammer (8) mit einem elastischen Puffer (19) ausgestattet ist.

## Revendications

1. Poste de transport pneumatique servant à l'envoi, à la réception et au transit de cartouches pneumatiques, comportant deux tubulures disposées dans des parois de limitation, situées réciproquement en vis-à-vis, du poste de transport pneumatique et prévues pour un tube de transport d'arrivée (6) et un tube de transport de départ (3), une ouverture formant sas d'arrivée pour des cartouches devant être envoyées, une ouverture (5) formant sas de sortie pour des cartouches devant être reçues, une chambre tubulaire (8), servant à la réception de cartouches, qui est fermée dans sa partie d'extrémité voisine du tube de transport de départ (3) et qui, dans la position de réception, est alignée par son extrémité ouverte avec la tubulure (6) prévue pour le tube de transport d'arrivée, la chambre tubulaire (8) étant reliée à une seconde chambre tubulaire (9) s'étendant parallèlement à la précédente et réglable en commun avec cette dernière et qui, dans une position, est en alignement avec les deux tubulures (3, 6) et, dans une autre position, est alignée avec l'ouverture formant sas d'entrée, caractérisé par les caractéristiques suivantes:

1. un conduit de circulation d'air (10) relie pneumatiquement la tubulure prévue pour le tube de transport d'arrivée (6) à la tubulure prévue pour le tube de transport de départ (3), lorsque la chambre tubulaire (8) est dans la position de réception;

2. le conduit de circulation d'air (10) débouche, par une extrémité, dans la chambre tubulaire et peut être réglé, en commun avec la première chambre tubulaire (8) et la seconde chambre tubulaire (9), de manière que l'accès du conduit de circulation d'air (10), au moins à la tubulure (3) prévue pour le tube de transport de départ, soit bloqué lorsque la seconde chambre tubulaire (9) est alignée avec les deux tubulures (3, 6), tandis qu'il est libéré lorsque la chambre tubulaire (8) est alignée avec les deux tubulures (3, 6).

2. Poste de transport pneumatique suivant la revendication 1, caractérisé par le fait que la tubulure (6) prévue pour le tube de transport d'arrivée est montée dans la paroi inférieure de limitation (4).

3. Poste de transport pneumatique suivant l'une des revendications 1 ou 2, caractérisé par le fait que le canal de circulation d'air (10) pénètre dans la chambre tubulaire (8), dans une zone proche de l'extrémité ouverte de cette chambre.

4. Poste de transport pneumatique suivant l'une des revendications 1 à 3, caractérisé par le fait que les deux chambres tubulaires (8, 9) sont disposées dans un support (7) qui comporte, au moins dans la zone marginale des extrémités ouvertes des deux chambres tubulaires (8, 9), des surfaces frontales parallèles aux parois de limitation voisines (1, 4).

5. Poste de transport pneumatique suivant la revendication 4, caractérisé par le fait que des bagues d'étanchéité (15, 16) enserrant les tubulures (3, 6) prévues pour le tube de transport d'arrivée et pour le tube de transport de départ sont montées dans les parois de limitation (1, 4).

6. Poste de transport pneumatique suivant les revendications 4 et 5, caractérisé par le fait que des rainures annulaires ménagées dans les parois de limitation (1, 4) logent les bagues d'étanchéité (15, 16).

7. Poste de transport pneumatique suivant les revendications 4 et 5 ou 6, caractérisé par le fait que les bagues d'étanchéité (15, 16) sont pressées contre les surfaces frontales du support (7) en étant soutenues élastiquement et/ou en étant réalisées de manière à être élastiques.

8. Poste de transport pneumatique suivant les revendications 1 à 7, caractérisé par le fait que la chambre tubulaire (8) possède une longueur moins importante que la seconde chambre tubulaire (9) et que la zone comprise entre l'extrémité fermée de la chambre tubulaire (8) et la paroi de limitation (1), recevant la tubulure (3) prévue pour le tube de transport de départ, est insérée au moins partiellement dans le conduit de circulation d'air (10).

9. Poste de transport pneumatique suivant l'une des revendications 4 à 8, caractérisé par le fait que le support (7) est réalisé sous la forme d'un élément de structure d'un seul tenant, dans lequel se trouve ménagé par usinage, outre les deux chambres tubulaires (8, 9), le conduit de circulation d'air (10).

10. Poste de transport pneumatique suivant la revendication 9, caractérisé par le fait que le conduit de circulation d'air (20) est réalisé au moins partiellement dans la zone comprise entre les deux chambres tubulaires (22, 23).

11. Poste de transport pneumatique suivant la revendication 10, caractérisé par le fait que le canal de circulation d'air (20) possède une section transversale dont les dimensions augmentent à partir de sa zone médiane.

12. Poste de transport pneumatique suivant l'une des revendications 4 à 11, caractérisé par le fait que le support (7) est monté de façon à être déplaçable et est entraîné linéairement.

13. Poste de transport pneumatique suivant la revendication 12, caractérisé par le fait que le support (7) possède un guide rectiligne (11), dans lequel s'engage un organe d'entraînement (12) fixé sur le bras de manivelle (13) d'un mécanisme d'entraînement à manivelle.

14. Poste de transport pneumatique suivant l'une des revendications 1 à 13, caractérisé par le fait que la distance entre les axes des deux chambres tubulaires (8, 9) est égale à la distance entre les axes de l'ouverture (2) formant sas d'entrée et de la tubulure (3).

15. Poste de transport pneumatique suivant l'une des revendications 1 à 14, caractérisé par le fait que la distance entre les axes des deux chambres tubulaires (8, 9) est égale à la distance entre les axes de l'ouverture (5) formant sas de sortie et de la tubulure (6) prévue pour le tube de transport d'arrivée.

16. Poste de transport pneumatique suivant l'une des revendications 4 à 15, caractérisé par le fait que le support (7) porte, dans la région de sa surface frontale tournée vers la paroi de limitation comportant l'ouverture (2) formant sas d'entrée, une butée d'arrêt (18) s'étendant au moins légèrement dans l'alignement de l'ouverture (2) formant sas d'entrée.

17. Poste de transport pneumatique suivant la revendication 16, caractérisé par le fait que la butée d'arrêt (18) est agencée et/ou est soutenue de telle manière que, lors du déplacement du support (7) amenant ce dernier dans la position alignée avec l'ouverture (2) formant sas d'entrée, ladite butée est déviée par une paroi latérale de limitation.

18. Poste de transport pneumatique suivant la revendication 17, caractérisé par le fait que la butée d'arrêt (18) peut basculer autour d'un axe de soutien parallèle à l'axe de la chambre tubulaire.

19. Poste de transport pneumatique suivant l'une des revendications 1 à 18, caractérisé par le fait qu'un contact pouvant être actionné par des cartouches est disposé au moins au voisinage de la chambre tubulaire.

20. Poste de transport pneumatique suivant l'une des revendications 1 à 19, caractérisé par le fait que l'extrémité fermée de la chambre tubulaire (8) est équipée d'un tampon élastique (19).

## Claims

1. A pneumatic tube-transmission station for the dispatch, reception and transit of pneumatic tube-transmission containers with two nozzles which are located on boundary walls, arranged opposite one another, of the pneumatic tube-transmission station for an incoming conveying tube (6) and an outgoing conveying tube (3), with a charging opening for pneumatic tube-transmission containers which are to be dispatched, with a discharging opening (5) for received pneumatic tube-transmission containers, with a tube chamber (8) which serves to receive pneumatic tube-transmission containers and which is sealed in the end zone which is adjacent the outgoing conveying tube (3) and whose open end is aligned—in the receiving position—with the nozzle (6) for the incoming conveying tube, where the tube chamber (8) is connected to a second tube chamber (9) running parallel to the former and together with which it can be commonly adjusted, and which in one position is aligned with the two nozzles (3, 6) and in another position is aligned with the charging opening, characterised by the following features:

1. when the tube chamber (8) is in the receiving position, an air conducting channel (10) connects the nozzle for the incoming conveying tube (6) pneumatically to that for the outgoing conveying tube (3);

2. at one end, the air conducting channel (10) opens into the tube chamber (8) and can be adjusted in common with the first tube chamber (8) and the second tube chamber (9) in such manner that, when the second tube chamber (9) is positioned in alignment with the two nozzles (3, 6), the access of the air conducting channel (10) at least to the nozzle (3) is blocked for the outgoing conveying tube, whereas when the tube chamber (8) is positioned in alignment with the two nozzles (3, 6) it is unblocked.

2. A pneumatic tube-transmission station as claimed in Claim 1, characterised in that the nozzle (6) for the incoming conveying tube is arranged on the lower boundary wall (4).

3. A pneumatic tube-transmission station as claimed in one of Claims 1 or 2, characterised in that the air conducting channel (10) enters the tube chamber (8) in a zone close to the open end of said chamber.

4. A pneumatic tube-transmission station as claimed in one of Claims 1 to 3, characterised in that the two tube chambers (8, 9) are arranged in a carrier body (7) which, at least in the edge zone of the open ends of the two tube chambers (8, 9), has end surfaces which extend parallel to the adjacent boundary walls (1, 4).

5. A pneumatic tube-transmission station as claimed in Claim 4, characterised in that sealing rings (15, 16) which embrace the nozzles (3, 6) for the incoming conveying tube and for the outgoing conveying tube are arranged on the boundary walls (1, 4).

6. A pneumatic tube-transmission station as claimed in Claims 4 and 5, characterised in that annular grooves in the boundary walls (1, 4) accommodate the sealing rings (15, 16).

7. A pneumatic tube-transmission station as claimed in Claims 4 and 5 or 6, characterised in that the sealing rings (15, 16) are spring mounted and/or designed and are pressed against the end surfaces of the carrier body (7).

8. A pneumatic tube-transmission station as claimed in one of Claims 1 to 7, characterised in that the tube chamber (8) has a shorter length than the second tube chamber (9), and the region between the closed end of the tube chamber (8) and the boundary wall (1) which accommodates the nozzle (3) for the outgoing conveying tube is at least partially included in the air conducting channel (10).

9. A pneumatic tube-transmission station as claimed in one of Claims 4 to 8, characterised in that the carrier body (7) is designed as an integral structural component in which, in addition to the two tube chambers (8, 9), the air conducting channel (10) is also formed.

10. A pneumatic tube-transmission station as claimed in Claim 9, characterised in that the air conducting channel (20) is formed at least partially in the region between the two tube chambers (22, 23).

11. A pneumatic tube-transmission station as claimed in Claim 10, characterised in that the air conducting channel (20) has increasing cross-sectional dimensions from its central zone outwards.

12. A pneumatic tube-transmission station as claimed in one of Claims 4 to 11, characterised in that the carrier body (7) is mounted and driven so as to be linearly displaceable.

13. A pneumatic tube-transmission station as claimed in Claim 12, characterised in that the carrier body (7) has a graduated guide (11) into which engages a driver (12) which is attached to the crank disc (13) of a crank gear.

14. A pneumatic tube-transmission station as claimed in one of Claims 1 to 13, characterised in that the axial distance between the two tube chambers (8, 9) is identical to the axial distance between the charging opening (2) and the nozzle (3).

15. A pneumatic tube-transmission station as claimed in one of Claims 1 to 14, characterised in that the axial distance between the two tube chambers (8, 9) is identical to the axial distance between the discharge opening (5) and the nozzle (6) for the incoming conveying tube.

16. A pneumatic tube-transmission station as claimed in one of Claims 4 to 15, characterised in that, in the region of its end face which faces towards the boundary wall which has the charging opening (2), the carrier body (7) bears a stop means (18) which projects at least slightly into the alignment of the charging opening (2).

17. A pneumatic tube-transmission station as claimed in Claim 16, characterised in that the stop means (18) is designed and/or mounted in such a manner that, when the carrier body (7) is moved into the position of alignment with the charging opening (2), it is deflected by a lateral boundary wall.

18. A pneumatic tube-transmission station as claimed in Claim 17, characterised in that the stop means (18) can be pivoted about a bearing axis which is axially parallel to the tube chambers.

19. A pneumatic tube-transmission station as claimed in one of Claims 1 to 18, characterised in that a contact which can be actuated by pneumatic tube-transmission containers is arranged at least in the region of the tube chambers.

20. A pneumatic tube-transmission station as claimed in one of Claims 1 to 19, characterised in that the sealed end of the tube chamber (8) is equipped with a resilient buffer (19).

0 056 559

FIG 1

FIG 2

11

FIG 3

FIG 4

FIG 5